# EUROPÄISCHE PATENTSCHRIFT

(11) **EP 2 663 796 B1**
(45) Veröffentlichungstag und Bekanntmachung des Hinweises auf die Patenterteilung: **17.09.2014**
(21) Anmeldenummer: 12702171.5
(22) Anmeldetag: 07.01.2012
(51) Int. Cl.: F16K 31/04, F16K 31/528

(54) **VORRICHTUNG ZUR BETÄTIGUNG EINES STELLVENTILS**
DEVICE FOR ACTUATING A CONTROL VALVE
DISPOSITIF D'ACTIONNEMENT D'UNE VANNE DE COMMANDE

(30) Priorität: 11.01.2011 DE 102011008305
(43) Veröffentlichungstag der Anmeldung: 20.11.2013
(73) Patentinhaber: Geräte- und Pumpenbau GmbH, Dr. Eugen Schmidt, 98673 Merbelsrod / Thüringen (DE)
(72) Erfinder: SCHMIDT, Andreas, 98673 Schwarzbach (DE); STEINER, Toni, 96528 Bachfeld (DE)
(86) Internationale Anmeldenummer: PCT/DE2012/000010
(87) Internationale Veröffentlichungsnummer: WO 2012/095100

(56) Entgegenhaltungen:
- EP-A2- 1 860 298
- WO-A1-03/042514
- GB-A- 1 262 605
- US-A- 2 701 102

## Beschreibung

Die Erfindung betrifft eine Vorrichtung zur Betätigung eines Stellventils, welches als Schieber, Kugelventil, Drehschieber, Tellerventil o.ä. ausgebildet sein kann, und welches der Steuerung oder Regelung von druckbeaufschlagten Medien, wie beispielsweise der Regelung des Kühlmittelvolumenstroms einer Brennkraftmaschine dient.

Im Stand der Technik sind verschiedenartige Vorrichtungen zur Betätigung von Stellventilen vorbeschrieben.
So wurde von der Anmelderin unter anderem bereits in der DE 102 07 653 C1 eine in der Praxis bewährte, elektrisch angetriebene Kühlmittelpumpe mit einem Axialschaufelrad und einem elektromotorisch betätigten Stellventil vorgestellt.
Das Stellventil ist bei dieser Bauform in Strömungsrichtung vor der elektromotorisch angetriebenen Kühlmittelpumpe angeordnet.
Der Elektromotor treibt in einer Drehrichtung das Pumpenlaufrad der Pumpe, und in der entgegengesetzten Drehrichtung über die Pumpenwelle und einen Freilauf das als Drehschieber ausgebildete Ventil an.

Der Einsatz eines Elektromotors im Kühlmittelvolumenstrom setzt dabei zwingend eine wasserdichte Kapselung des Elektromotors voraus, woraus zwangsläufig erhöhte Fertigungskosten resultieren.
Infolge der eingesetzten elektrischen Bauteile bzw. elektronischen Komponenten, sind stets obere Grenzwerte der Temperaturbelastung einzuhalten, um ein Versagen dieser Bauteile durch Überhitzen zu vermeiden. Ein wesentlicher Nachteil dieser elektromotorisch angetriebenen Kühlmittelpumpe mit integrierter Regelung besteht darin, dass nach einem "Stromausfall" kein "Fail-safe", d.h. ein Folgeschäden vermeidendes Weiterfunktionieren der Baugruppe selbst bei ausgefallener Regelung gewährleistet werden kann.
In der DE 10 2009 012 923 B3 wurde von der Anmelderin zudem in Verbindung mit einer mechanisch angetriebenen, mit einem Axialschaufelrad ausgestatteten Kühlmittelpumpe, eine weitere, ebenfalls bereits in der Praxis bewährte, mittels einer Unterdruckregelung betätigte Vorrichtung zur Verstellung eines als Schieber ausgebildeten Stellventils vorbeschrieben.
Bei dieser Bauform ist das Stellventil in Strömungsrichtung nach der Kühlmittelpumpe angeordnet.
Diese Anordnung des Stellventils erzwingt bei der vorgenannten Lösung einen relativ langen axialen Aufbau und hat zudem wegen der direkten, die Betätigung des axialen Stellschiebers bewirkenden, Krafteinleitung hohe erforderliche Betätigungskräfte zur Folge.
Weiterhin ist aus der DE 10 2008 048 893 A1 eine Kühlmittelfördereinheit bekannt, bei welcher zwischen der, wiederum mit einem Axialschaufelrad versehenen Kühlmittelpumpe und dem in Strömungsrichtung nach der Kühlmittelpumpe angeordneten Stellventil, beispielsweise einem Kugelventil oder einem Drehschieber, ein zusätzlicher Kühlmittelaustritt angeordnet ist. Die zu einer stufenlosen Betätigung des Stellventils erforderliche Vorrichtung greift bei dieser Lösung an einem in der Drehachse des Stellventils angeordneten Vierkant an.

Auch mittels dieser Lösung kann keine "Fail-safe" Funktion, d.h. ein automatisches vollständiges Öffnen des zu regelnden Ventils bei Ausfall der Regelung realisiert werden, so dass es, wenn die Regelung bei geschlossenem Ventil ausfällt, zwangsläufig zu einer Überhitzung bzw. zu einer Zerstörung des Kfz-Motors kommt.
Zudem hat der bei dieser Bauform vorgesehene direkte Kraftangriff in der Drehachse des Stellventils, auf Grund der hohen inneren Reibung der in der DE 10 2008 048 893 A1 offenbarten Anordnung, zwingend eine niedrige Regelgüte zur Folge, welche keinesfalls eine feinfühlige, ruckfreie Regelung gewährleistet.
Weiterhin ist aus der DE 198 09 123 B4 eine weitere Wasserpumpe für den Kühlkreislauf einer Brennkraftmaschine mit einem im Pumpengehäuse integriertem Stellventil bekannt, welches als Drehschieber ausgebildet ist.
Zur Verstellung dieses Drehschiebers wird bei der DE 198 09 123 B4 entweder ein Stellmotor, eine Wachspatrone oder ein Bimetallstreifen eingesetzt.
Auch diese Bauform hat bei Einsatz eines Stellmotors den Nachteil, dass keinesfalls eine "Fail-safe" Funktion realisierbar ist, wobei der Einsatz eines Stellmotors zudem sehr kostenintensiv ist und keinesfalls eine feinfühlige, ruckfreie Regelung mit hoher Regelgüte (d.h. eine punktgenaue, in Weg und Kraft exakt reproduzierbare Ventileinstellung) gewährleistet.
Beim Einsatz eines Bimetallstreifens oder einer Wachspatrone ist keinesfalls eine aktive, bedarfsabhängige Regelung möglich.
Das Wachs in der Wachspatrone bzw. der Bimetallstreifen hat sich nach dem Erreichen der optimalen Kühlmitteltemperatur (beispielsweise ca. 80°C bis 90°C bei Kraftfahrzeugen) derart verflüssigt, bzw. verformt hat, dass die jeweils erreichten, von der Kühlmitteltemperatur abhängigen, "physikalischen Veränderungen" in der Wachspatrone bzw. am Bimetallstreifen erst nach Abkühlung des Motors wieder in den "Ursprungszustand zurück geführt" werden, woraus eine sehr träge Regelung bei derartigen Systemen resultiert.
Im Stand der Technik sind zudem weitere Vorrichtungen zur Betätigung von Stellventilen, wie beispielsweise die in der WO 2008/046563 A1 offenbarte Vorrichtung zur Betätigung einer Ventilklappe vorbeschrieben.
Bei dieser Lösung erfolgt die Ansteuerung einer, mittels einer Welle drehbar gelagerten Ventilklappe, auf die als Rückstellelement eine Spiralfeder einwirkt, über eine an der Welle angeordnete Scheibe/Rolle an deren Außenrand das eine Ende eines Bowdenzugseiles angreift, wobei das andere Ende des Bowdenzugseiles an einem Hebel befestigt ist dessen Drehachse von einem elektrisch betriebenen Schrittmotor angetrieben wird.
Da auch diese Vorrichtung mit einem Elektromotor ausgestattet ist, weist auch diese Lösung wiederum alle Nachteile eines Elektroantriebes, wie erhöhte Fertigungskosten, obere Grenzwerte der zulässigen Temperaturbelastung, aber auch Störanfälligkeit bei Schwingungsbelastungen u.a.m. auf.
Dabei kann mit der in der WO 2008/046563 A1 vorgeschlagenen Betätigungsvorrichtung, auf Grund der konstruktiv bedingten hohen Reibverluste, mit hohen erforderlichen Verstellkräften und hohen Beanspruchungen aller die Betätigung der Ventilklappe bewirkenden Baugruppen nur eine sehr geringe Regelgüte realisiert werden.
Zudem ist die in der WO 2008/046563 A1 vorgeschlagene Vorrichtung in ihrer Gesamtheit sehr verschmutzungsanfällig und erfordert gleichzeitig einen relativ großen Bauraum.
Aus der DE 197 29 648 A1 ist eine weitere Vorrichtung zum Verstellen einer Ventilklappe im Ansaugsystem eines Verbrennungsmotors bekannt.
Bei dieser Anordnung wird in Abhängigkeit von einem, an einer rückstellfederbelasteten Membraneinrichtung anliegenden Unterdruck, von der Membraneinrichtung eine Längsbewegung ausgeführt, welche über eine einseitig gelagerte Koppelstange wegübersetzt auf eine Traverse übertragen wird, wobei das der Koppelstange gegenüberliegende Ende der Traverse gelenkig mit einem, an einer drehbar gelagerten Ventilklappe angeordneten Hebel so verbunden ist, so dass eine durch die Verschiebung der Membraneinrichtung hervorgerufene Längsbewegung in Folge der vorgeschlagenen Anordnung eine Drehung der Ventilklappe um 90° bewirkt. Bei dieser Vorrichtung zum Verstellen einer Ventilklappe handelt es sich um eine Vorrichtung, die auf Grund ihres konstruktiven Aufbaus recht große Verstellkräfte benötigt, und die die einzelnen Bauteile dementsprechend hoch beansprucht. Auf Grund des konstruktiven Aufbaus lässt diese Vorrichtung keine Regelung zu, sondern bewirkt lediglich das Verstellen der Ventilklappe aus einer vollständig geöffneten Stellung in eine vollständig geschlossene Stellung.

Der Erfindung liegt demgegenüber die Aufgabe zugrunde, eine Vorrichtung zur Betätigung eines Stellventils, welches als Schieber, Kugelventil, Drehschieber, Tellerventil o.ä. ausgebildet sein kann und der Regelung von druckbeaufschlagten Medien, wie beispielsweise der Regelung des Kühlmittelvolumenstroms einer Brennkraftmaschine dient, zu entwickeln, welche die vorgenannten Nachteile des Standes der Technik vermeidet, und die bei geringer mechanischer Beanspruchung der die Betätigung des Stellventils bewirkenden Baugruppen, mit minimalen Reibungsverlusten in Verbindung mit sehr niedrigen Betätigungskräften, eine sehr feinfühlige, ruckfreie Regelung mit hoher Regelgüte, d.h. eine in Weg und Kraft exakt reproduzierbare punktgenaue Ventileinstellung, mit nahezu gleicher Regelqualität beim Öffnen und Schließen ermöglicht, dabei gleichzeitig eine "Fail-safe" Funktion (d.h. ein automatisches vollständiges Öffnen des zu regelnden Ventils bei Ausfall der Regelung) gewährleistet, und welche sich zudem durch eine sehr kompakte, fertigungs- und montagetechnisch einfache, kostengünstige und robuste Bauform auszeichnet, störunanfällig gegenüber Schwingungsbelastungen ist, und zudem unabhängig von der Temperatur des druckbeaufschlagten Mediums arbeitet.

Erfindungsgemäß wird diese Aufgabe durch eine Vorrichtung zur Betätigung eines Stellventils 1 nach den Merkmalen des unabhängigen Anspruches der Erfindung gelöst, welche als Schieber, Kugelventil, Drehschieber, Tellerventil o.ä. ausgebildet sein kann und der Steuerung und/oder Regelung von druckbeaufschlagten Medien, wie beispielsweise der Regelung des Kühlmittelvolumenstroms einer Brennkraftmaschine dient.

Vorteilhafte Ausführungen Einzelheiten und Merkmale der Erfindung ergeben sich aus den Unteransprüchen sowie der nachfolgenden Beschreibung der erfindungsgemäßen Lösung in Verbindung mit den Zeichnungen zur erfindungsgemäßen Lösung.

Nachfolgend wird die Erfindung an Hand eines Ausführungsbeispieles in Verbindung mit sechs dem Ausführungsbeispiel zugeordneten Darstellungen näher erläutert.

Es zeigen dabei:

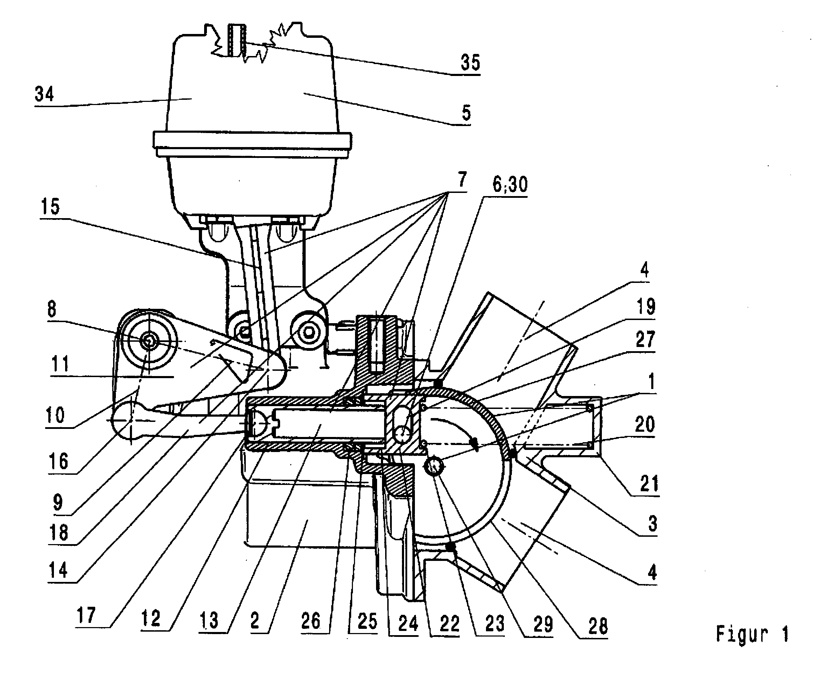

- Figur 1 :: die erfindungsgemäße Vorrichtung zur Betätigung eines Stellventils 1 mit einer pneumatisch betätigten Unterdruckdose 34, einem Kugelventil 28 und zwei im Strömungsleitgehäuse 3 angeordneten Öffnungen 4 für den Strömungsaustritt, von denen in der "hinteren" Endlage des erfindungsgemäßen Schubkolbens 13 die obere der beiden Öffnungen 4 vollständig von der Sperrfläche 27 des Kugelventils 28 verschlossen, und gleichzeitig die unter der beiden Öffnungen 4 vollständig geöffnet ist, in der Seitenansicht, im Teilschnitt;

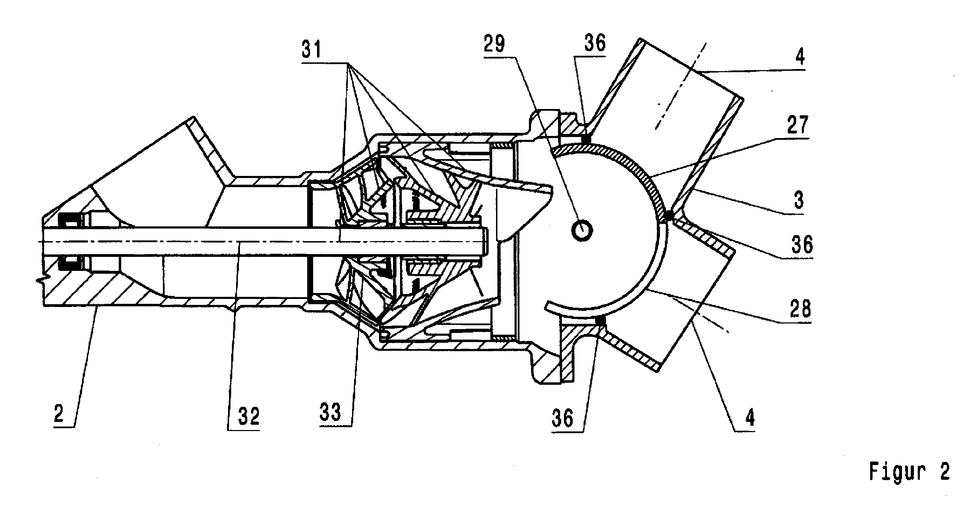

- Figur 2 :: zeigt die Anordnung gemäß Figur 1, mit dem Kugelventil 28 in der "oberen" Endlage, in einer Schnittdarstellung;

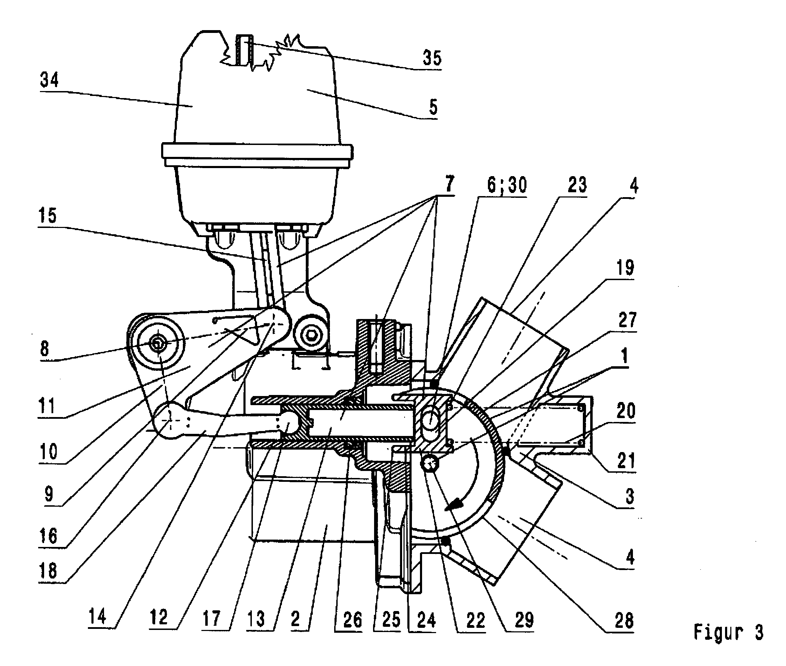

- Figur 3 :: die erfindungsgemäße Vorrichtung zur Betätigung eines Stellventils 1 mit einer pneumatisch betätigten Unterdruckdose 34, einem Kugelventil 28 und zwei im Strömungsleitgehäuse 3 angeordneten Öffnungen 4 für den Strömungsaustritt, von denen in der "Mittenstellung" des erfindungsgemäßen Schubkolbens 13 die obere und gleichzeitig die untere der beiden Öffnungen 4 teilweise von der Sperrfläche 27 des Kugelventils 28 verschlossen ist, in der Seitenansicht, im Teilschnitt;

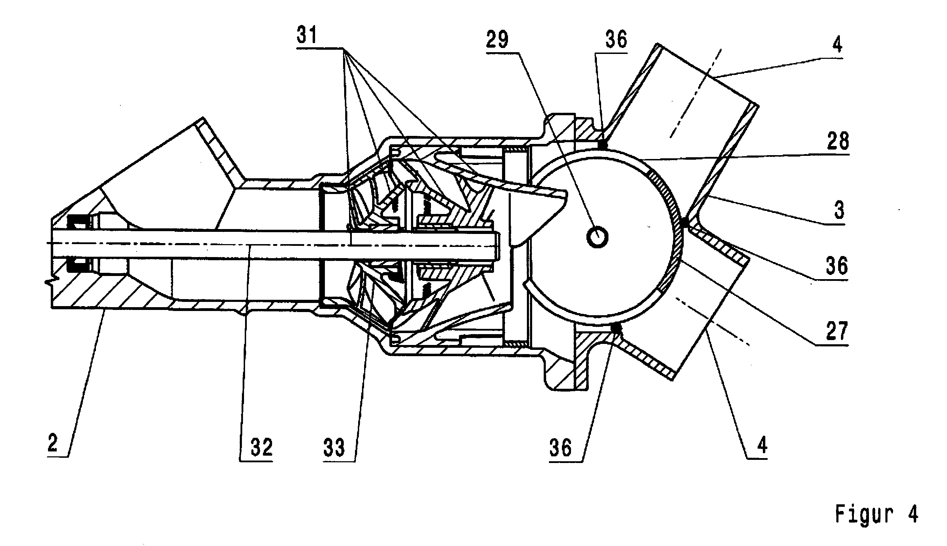

- Figur 4 :: zeigt die Anordnung gemäß Figur 3, mit dem Kugelventil 28 in der "Mittenstellung", in einer Schnittdarstellung;

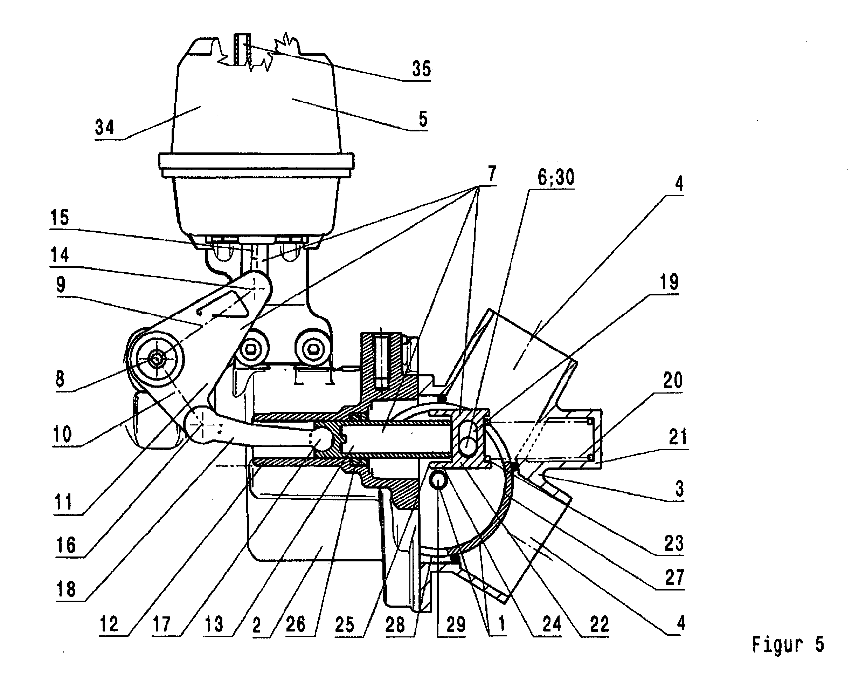

- Figur 5 :: die erfindungsgemäße Vorrichtung zur Betätigung eines Stellventils 1 mit einer pneumatisch betätigten Unterdruckdose 34, einem Kugelventil 28 und zwei im Strömungsleitgehäuse 3 angeordneten Öffnungen 4 für den Strömungsaustritt, von denen in der "vorderen" Endlage des erfindungsgemäßen Schubkolbens 13 die untere der beiden Öffnungen 4 vollständig von der Sperrfläche 27 des Kugelventils 28 verschlossen, und gleichzeitig die obere der beiden Öffnungen 4 vollständig geöffnet ist, in der Seitenansicht, im Teilschnitt;

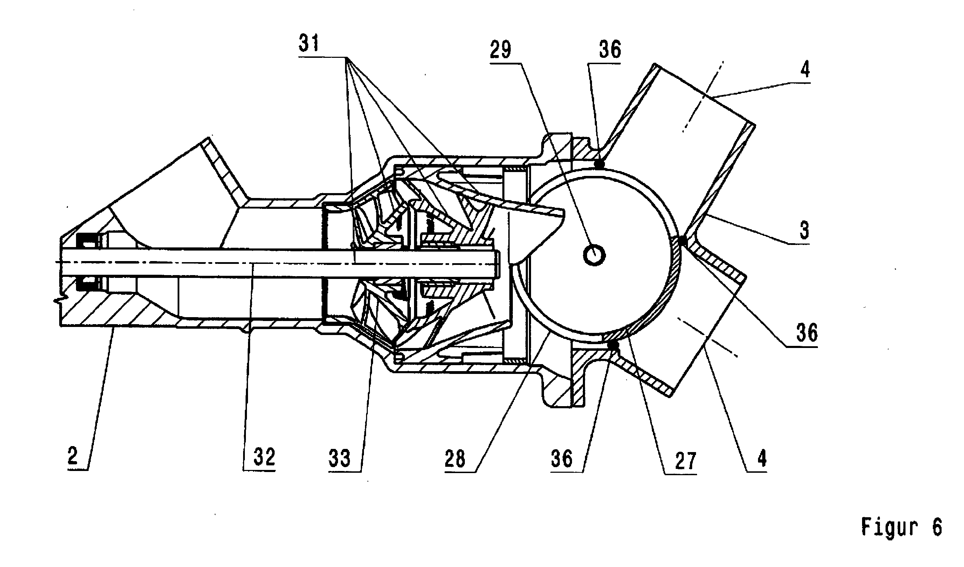

- Figur 6 :: zeigt die Anordnung gemäß Figur 1, mit dem Kugelventil 28 in der "unteren" Endlage, in einer Schnittdarstellung.

Diese erfindungsgemäße, in den Figuren 1 bis 6 in drei unterschiedlichen Arbeitsstellungen dargestellte Vorrichtung zur Betätigung eines Stellventils 1 mit einem Strömungsgehäuse 2 und einem diesen benachbart angeordneten Strömungsleitgehäuse 3 an dem zwei Öffnung/en 4 angeordnet sind, die entsprechend der hier vorgesehenen Strömungsrichtung im Strömungsgehäuse 2 dem Strömungsaustritt dienen, wobei das Stellventil 1 in dieser Ausführungsform am Strömungsgehäuse 2 derart angeordnet ist, dass der dem Stellventil 1 benachbart angeordnete Aktuator 5, in diesem Ausführungsbeispiel eine Unterdruckdose 34, auf ein am Stellventil 1 angeordnetes Betätigungselement 6 über die erfindungsgemäße, zwischen dem Betätigungselement 6 und dem Aktuator 5 angeordnete Betätigungsvorrichtung 7 einwirkt.
Wobei sich die erfindungsgemäße Betätigungsvorrichtung 7 dadurch auszeichnet, dass am Strömungsgehäuse 2 einerseits starr der Aktuator 5, die Unterdruckdose 34, und andererseits ein Drehpunkt 8 eines mit einem Lastarm 9 und einem Kraftarm 10 versehener Doppelhebels 11, um welchen dieser drehgelenkig am Strömungsgehäuse 2 angeordnet ist, zudem ist am Strömungsgehäuse 2 weiterhin eine Kolbenführung 12 für einen linear verschiebbar am Strömungsgehäuse 2 gelagerten Schubkolben 13 starr angeordnet. Erfindungsgemäß ist zwischen einem am Lastarm 9 des Doppelhebels 11 angeordneten Lastangriffsgelenk 14 und dem Aktuator 5 schwenkbar eine Koppelstange 15, und zwischen einem am Kraftarm 10 des Doppelhebels 11 angeordneten Kraftangriffsgelenk 16 und dem Betätigungsgelenk 17 des Schubkolbens 13 schwenkbar eine Pleulstange 18 angeordnet. Wesentlich ist in diesem Zusammenhang, dass an dem dem Betätigungsgelenk 17 gegenüberliegenden Ende des Schubkolbens 13 ein Schubgelenk 19 angeordnet ist, in dem das Betätigungselement 6 des Stellventils 1, im vorliegenden Ausführungsbeispiel, eines Kugelventils 28, verschiebbar und drehbar angeordnet ist.
Kennzeichnend ist dabei, dass eine dem Schubgelenk 19 benachbart angeordnete Rückstellfeder 20, die in einer am Strömungsleitgehäuse 3 angeordneten Federaufnahme 21 gelagert ist, erfindungsgemäß in Richtung der Längsachse des Schubkolbens 13 auf diesen derart einwirkt, dass der Schubkolben 13 stets spielfrei mit dem Betätigungsgelenk 17 an der Pleulstange 18, d.h. von der Rückstellfeder 20 vorgespannt, anliegt.
Diese erfindungsgemäße Vorrichtung zur Betätigung eines Stellventils 1, wie im vorliegenden Ausführungsbeispiel eines Kugelventils 28, ermöglicht, wie in den Figuren 2, 4 und 6 dargestellt, die Regelung des Kühlmittelvolumenstroms einer Brennkraftmaschine mit geringer mechanischer Beanspruchung der die Betätigung des Stellventils bewirkenden Baugruppen, bei minimalen Reibungsverlusten in Verbindung mit sehr niedrigen Betätigungskräften, wodurch eine sehr feinfühlige, ruckfreie Regelung mit hoher Regelgüte, d.h. eine in Weg und Kraft exakt reproduzierbare punktgenaue Ventileinstellung, mit nahezu gleicher Regelqualität beim Öffnen und Schließen gewährleistet werden kann, und gleichzeitig eine "Fail-safe" Funktion (d.h. ein automatisches vollständiges Öffnen des zu regelnden Ventils mittels der Rückstellfeder 20 bei Ausfall der Regelung) gewährleistet ist, wobei sich die erfindungsgemäße Lösung zudem durch eine sehr kompakte, fertigungs- und montagetechnisch einfache, kostengünstige und robuste Bauform auszeichnet, störunanfällig gegenüber Schwingungsbelastungen ist, und zudem unabhängig von der Temperatur des druckbeaufschlagten Mediums arbeitet.
Durch die erfindungsgemäße Anordnung wird es in Verbindung mit dem erfindungsgemäß "eingespannt" arbeitenden Kolbens möglich, jede auch nur denkbare Zwischenstellung des Stellventils 1 jederzeit reproduzierbar wiederholt anzusteuern und so eine millimetergenauen, spielfreie, d.h. sehr präzise Regelung mit hoher Regelgüte, in Verbindung mit einer geringen mechanischen Beanspruchung der die Betätigung des Stellventils 1, des Kugelventils 28 bewirkenden Baugruppen zu gewährleisten.
Die erfindungsgemäße Anordnung bewirkt dabei in Verbindung mit den aus der erfindungsgemäßen Anordnung resultierenden, minimalen Reibungsverlusten gleichzeitig auch, dass bereits mit sehr kleinen Unterdrücken ausreichend hohe Verstellkräfte erzeugt werden können, welche es ermöglichen Ventile aller Art zuverlässig zu betätigen.
Im Zusammenhang mit den sehr niedrigen erforderlichen Betätigungskräfte zur Einstellung/Verstellung des Stellventil 1 wird es möglich jede denkbare Zwischenstellung des Stellventils 1 sehr sensibel anzusteuern, so dass eine in Weg und Kraft exakt reproduzierbare punktgenaue Ventileinstellung mit einer sowohl beim Öffnen wie auch beim Schließen des zu regelnden Ventils nahezu gleichen Regelqualität gewährleistet werden kann.
In Verbindung mit der erfindungsgemäßen Anordnung ermöglicht die Rückstellfeder 20 zugleich eine schnelle Rückstellung, d.h. ein schnelles Öffnen des Ventils, und gewährleistet wie bereits erwähnt gleichzeitig die "Fail-safe" Funktion, d.h. sie bewirkt ein automatisches vollständiges Öffnen des zu regelnden Ventils bei Ausfall der Regelung.
Die sehr kompakte, fertigungs- und montagetechnisch einfache, kostengünstige und robuste erfindungsgemäße Bauform ist dabei störunanfällig gegenüber Schwingungsbelastungen, wie auch gegenüber Verschmutzungen und arbeitet auf Grund der räumlichen Anordnung, der erfindungsgemäß miteinander in Wirkverbindung tretenden Baugruppen, außen am Strömungsgehäuse, unabhängig von der jeweiligen Temperatur des zu regelnden druckbeaufschlagten Mediums, so dass eine sehr hohe zulässige maximale Temperaturbelastung möglich wird.
Erfindungswesentlich ist dabei auch, dass das Schubgelenk 19 in einer bevorzugten Bauform in einem Schubstück 22, d.h. als separate Baueinheit angeordnet ist, in dem neben einem senkrecht zur Verschieberichtung des Schubkolbens 13 verlaufenden Langloch, dem Schubgelenk 19, an einer Stirnseite, der als Druckfeder ausgebildeten Rückstellfeder 20 benachbart, ein Federzentriersitz 23 und an der gegenüberliegenden Stirnseite, dem Schubkolben 13 benachbart, ein Kolbenzentrierbund 24 mit einem Gehäuseanlagesteg 25 angeordnet ist.
Diese vorteilhafte Ausbildung des Schubgelenkes als separates Schubstück vereinfacht dabei nochmals die Herstellung wie auch die Montage der erfindungsgemäßen Vorrichtung und ermöglicht insbesondere bei einer Vielzahl unterschiedlicher Baugrößen gleichzeitig eine deutliche Reduzierung der Lagerhaltung durch einen mittels der erfindungsgemäßen Anordnung möglich werdenden Standardisierungseffekt.
Kennzeichnend ist dabei weiterhin, dass das Lastangriffsgelenk 14, das Kraftangriffsgelenk 16 und das Betätigungsgelenk 17 als Kugelgelenke ausgebildet sind. Dadurch wird eine hohe Betriebssicherheit und Zuverlässigkeit selbst unter extremen Betriebsbedingungen, wie im Zusammenhang mit nicht zueinander "fluchtenden" Getriebeebenen gewährleistet.
Ein weiteres Merkmal der Erfindung ist auch, dass am schubgelenkseitigen Ende der Kolbenführung 12 des Schubkolbens 13 Kolbendichtungen 26 angeordnet sind. Diese dienen der Erhöhung der Zuverlässigkeit und senken insbesondere die Störanfälligkeit gegenüber extremen Verschmutzungen, z.B. auch in Verbindung mit längeren Stillstandszeiten.
Wesentlich ist in diesem Zusammenhang aber auch, dass, wie in allen Darstellungen des Ausführungsbeispiels offenbart, das Stellventil 1 als ein mit einer Sperrfläche 27 versehenes Kugelventil 28, mit einer im Strömungsleitgehäuse 3 gelagerten Kugelventilachse 29 ist, und dass das Strömungsleitgehäuse 3 mit zwei Öffnungen 4 für den Strömungsaustritt versehen ist, wobei als Betätigungselement 6 am Kugelventil 28 ein um einen Radius von der Kugelventilachse 29 beabstandet angeordneter Exzenterstift 30 angeordnet ist.
Erfindungsgemäß ist dabei auch, dass im Bereich der beiden Öffnungen 4 für der Strömungsaustritt zwischen dem Strömungsleitgehäuse 3 und dem Kugelventil 28 jeweils Dichtungen 36 angeordnet sind, die eine kostengünstige, optimale Abdichtung der Ausströmöffnungen und somit eine sehr betriebsichere, zuverlässige, optimale Regelung des Kühlmittelvolumenstromes gewährleisten.
Kennzeichnend ist dabei auch, dass, wie in den Figuren 2, 4, und 6 dargestellt, im Strömungsgehäuse 2 eine axial durchströmte Kühlmittelpumpe 31 mit einem auf einer Antriebswelle 32 angeordneten Halbaxialschaufelrad 33 angeordnet ist.
Diese in den o.g. Darstellungen des vorliegenden Ausführungsbeispiels offenbarte Bauform der erfindungsgemäßen Vorrichtung zur Betätigung eines Stellventils 1 in Verbindung mit einer axial durchströmten Kühlmittelpumpe 31, und zwei "geregelten" Öffnungen 4 für den Strömungsaustritt, ermöglicht beispielsweise, dass über eine der beiden Öffnungen 4 ein Hauptstromkanal versorgt werden kann, mittels dem eine optimale Kühlung des Zylinderkurbelgehäuses des Zylinderkopfes gewährleistet ist.
Über die zweite "geregelte" Öffnung kann ein Bypasskanal angeschlossen werden, der bei "Null-Förderung" im Hauptstromkanal gleichzeitig die optimale Kühlung spezieller Komponenten, wie z.B. der Abgasrückführung, des Abgaskrümmers, der Heizung u.a.m. gewährleistet. D.h. mittels der vorliegenden Lösung kann bei vollständig vom erfindungsgemäßen Stellventil 1 abgeregelten/geschlossenen Hauptstromkanal eine optimalen Erwärmung des Motors mit "stehendem Kühlwasser" im Zylinderkurbelgehäuse und im Zylinderkopf realisiert werden.
Gleichzeitig bewirkt die erfindungsgemäße Anordnung in dieser Arbeitsstellung/Endlage des Stellventils 1, d.h. des Kugelventils 28, einen vollständig geöffneten Bypasskanal, und somit eine optimale Kühlung der vom Bypasskanal "bedienten" spezieller Komponenten, wie z.B. der Abgasrückführung, des Abgaskrümmers, der Heizung u.a.m..
Die in diesem Ausführungsbeispiel dargestellte erfindungsgemäße Lösung bewirkt, dass der aus dem Strömungsgehäuse 2 in das Strömungsleitgehäuse 3 einströmende Kühlmittelvolumenstrom mittels der erfindungsgemäßen Lösung einfach und kostengünstig bedarfsgerecht optimal geregelt, d.h. vollständig oder teilweise in jeweils einen oder auch definiert aufgeteilt in beide für den Strömungsaustritt vorgesehenen Öffnungen 4, beispielsweise einen Hauptstromkanal und/oder einen Bypasskanal eingeleitet werden kann, so dass mittels der erfindungsgemäßen Lösung auch bei Kaltstart des Motors der Hauptstromkanal vollständig abgeregelt werden kann, so dass beim Kaltstart des Motors im Hauptstromkanal eine Nullfördermenge gewährleistet ist.
Gleichzeitig bewirkt die, im vorliegenden Ausführungsbeispiel beschriebene Anordnung auch, dass aus der in den Figuren 2, 4 und 6 dargestellten Kühlmittelpumpe 31 druckseitig stets ein Kühlmittelvolumenstrom austreten kann, so dass die Kühlmittelpumpe 31 nie gegen stehendes Kühlmittel arbeiten muss.
Dieser im vorliegenden Ausführungsbeispiel stets gewährleistete Kühlmittelvolumenstromumlauf bewirkt eine deutliche Reduzierung der Gesamtantriebsleistung der erfindungsgemäß im Ausführungsbeispiel angeordneten Kühlmittelpumpe.
Kennzeichnend ist weiterhin auch, dass wie im Ausführungsbeispiel dargestellt, der Aktuator 5 eine Unterdruckdose 34 mit einem Unterdruckanschluss 35 ist. Der Einsatz der erfindungsgemäßen Anordnung ermöglicht in Verbindung mit der Anordnung einer Unterdruckdose 34 in dem hier vorgestellten Ausführungsbeispiel eine aktive Regelung des Kühlmittelkreislaufes eines Kraftfahrzeuges in allen Betriebszuständen.
So werden im Stadtverkehr auf Grund der CO₂ - Emissionen höhere Kühlmitteltemperaturen gefahren, dies erfordert sehr kurze Regelzeiten, bei Autobahn- oder Überlandfahrten hingegen werden etwas niedrigere Kühlmitteltemperaturen gefahren, all diese Anforderungen können in Verbindung mit dem Motormanagement mittels der hier vorgestellten erfindungsgemäßen Anordnung erstmals mit einer sehr hohe Regelgüte bei gleichzeitig sehr niedrigen Bauteilkosten problemlos realisiert werden.
Die erfindungsgemäße Vorrichtung ermöglicht es dem Motormanagement, auf Grund der exakt reproduzierbaren Betätigungskräfte, mit exakt reproduzierbaren Verstellwegen, und einer nahezu gleichen Regelqualität beim Öffnen wie auch beim Schließen, in Verbindung mit einer punktgenauen, jederzeit exakt reproduzierbaren Einstellung der "Ventilstellung", dass entsprechend dem jeweiligen Betriebszustand (z. B. Stadtverkehr, Überland, Autobahn, ...) über eine exakte Variation der Regelzeiten und Regelwege stets die optimale Kühlmitteltemperatur exakt eingestellt werden kann.

### Bezugszeichenzusammenstellung

- 1: Stellventil
- 2: Strömungsgehäuse
- 3: Strömungsleitgehäuse
- 4: Öffnung
- 5: Aktuator
- 6: Betätigungselement
- 7: Betätigungsvorrichtung
- 8: Drehpunkt
- 9: Lastarm
- 10: Kraftarm
- 11: Doppelhebel
- 12: Kolbenführung
- 13: Schubkolben
- 14: Lastangriffsgelenk
- 15: Koppelstange
- 16: Kraftangriffsgelenk
- 17: Betätigungsgelenk
- 18: Pleulstange
- 19: Schubgelenk
- 20: Rückstellfeder
- 21: Federaufnahme
- 22: Schubstück
- 23: Federzentriersitz
- 24: Kolbenzentrierbund
- 25: Gehäuseanlagesteg
- 26: Kolbendichtung
- 27: Sperrfläche
- 28: Kugelventil
- 29: Kugelventilachse
- 30: Exzenterstift
- 31: Kühlmittelpumpe
- 32: Antriebswelle
- 33: Halbaxialschaufelrad
- 34: Unterdruckdose
- 35: Unterdruckanschluss
- 36: Dichtung

## Patentansprüche

1. Vorrichtung zur Betätigung eines Stellventils (1) mit einem Strömungsgehäuse (2) und einem diesen benachbart angeordneten Strömungsleitgehäuse (3) an dem eine / mehrere Öffnung/en (4) angeordnet ist / sind, die entsprechend der vorgesehenen Strömungsrichtung im Strömungsgehäuse (2) entweder dem Strömungseintritt oder dem Strömungsaustritt dient/dienen, wobei das Stellventil (1) entweder im Strömungsgehäuse (2) und/oder im Strömungsleitgehäuse (3) derart angeordnet ist, dass ein dem Stellventil (1) benachbart angeordneter Aktuator (5) auf ein am Stellventil (1) angeordnetes Betätigungselement (6) direkt oder über eine zwischen dem Betätigungselement (6) und dem Aktuator (5) angeordnete Betätigungsvorrichtung (7) einzuwirken vermag, **dadurch gekennzeichnet,**
a) **dass** der Aktuator (5) am Strömungsgehäuse (2) starr, ein mit einem Drehpunkt (8), einem Lastarm (9) und einem Kraftarm (10) versehener Doppelhebel (11) um seinen Drehpunkt am Strömungsgehäuse (2) drehgelenkig, und in einer am Strömungsgehäuse (2) starr angeordneten Kolbenführung (12) ein Schubkolben (13) linear verschiebbar am Strömungsgehäuse (2) befestigt ist, und
b) **dass** zwischen einem am Lastarm (9) angeordneten Lastangriffsgelenk (14) und dem Aktuator (5) schwenkbar eine Koppelstange (15), und zwischen einem am Kraftarm (10) angeordneten Kraftangriffsgelenk (16) und dem Betätigungsgelenk (17) des Schubkolbens (13) schwenkbar eine Pleulstange (18) angeordnet ist, und
c) **dass** an dem dem Betätigungsgelenk (17) gegenüberliegenden Ende des Schubkolbens (13) ein Schubgelenk (19) angeordnet ist, in dem das Betätigungselement (6) des Stellventils (1) verschiebbar und/oder drehbar angeordnet ist, und
d) **dass** eine dem Schubgelenk (19) benachbart angeordnete Rückstellfeder (20), die in einer am Strömungsleitgehäuse (3) angeordneten Federaufnahme (21) gelagert ist, in Richtung der Längsachse des Schubkolbens (13) auf diesen derart einwirkt, dass der Schubkolben (13) stets spielfrei mit dem Betätigungsgelenk (17) an der Pleulstange (18) anliegt.

2. Vorrichtung zur Betätigung eines Stellventils (1) nach Anspruch 1, dass das Schubgelenk (19) in einem Schubstück (22), d.h. als separate Baueinheit angeordnet ist, in dem neben einem senkrecht zur Verschieberichtung des Schubkolbens (13) verlaufenden Langloch, dem Schubgelenk (19), an einer Stirnseite, der als Druckfeder ausgebildeten Rückstellfeder (20) benachbart, ein Federzentriersitz (23) und an der gegenüberliegenden Stirnseite, dem Schubkolben (13) benachbart, ein Kolbenzentrierbund (24) mit einem Gehäuseanlagesteg (25) angeordnet ist.

3. Vorrichtung zur Betätigung eines Stellventils (1) nach Anspruch 1, **dadurch gekennzeichnet, dass** das Lastangriffsgelenk (14), das Kraftangriffsgelenk (16) und das Betätigungsgelenk (17) als Kugelgelenke ausgebildet sind.

4. Vorrichtung zur Betätigung eines Stellventils (1) nach Anspruch 1, **dadurch gekennzeichnet, dass** am schubgelenkseitigen Ende der Kolbenführung (12) des Schubkolbens (13) Kolbendichtungen (26) angeordnet sind.

5. Vorrichtung zur Betätigung eines Stellventils (1) nach Anspruch 1, **dadurch gekennzeichnet, dass** das Stellventil (1) als ein mit einer Sperrfäche (27) versehenes Kugelventil (28), mit einer im Strömungsleitgehäuse (3), mit zwei Öffnungen (4) für den Strömungsautritt, gelagerten Kugelventilachse (29), und einem als Betätigungselement (6) um einen Radius von der Kugelventilachse (29) beabstandet angeordneten Exzenterstift (30), ausgebildet ist.

6. Vorrichtung zur Betätigung eines Stellventils (1) nach Anspruch 1, **dadurch gekennzeichnet, dass** im Strömungsgehäuse (2) eine axial durchströmte Kühlmittelpumpe (31) mit einem auf einer Antriebswelle (32) angeordneten Halbaxialschaufelrad (33) angeordnet ist.

7. Vorrichtung zur Betätigung eines Stellventils (1) nach Anspruch 1, **dadurch gekennzeichnet, dass** der Aktuator (5) pneumatisch, hydraulisch, elektrisch, oder auch elektomechanisch, z.B. mittels einer von einen Schrittmotor angetriebene Antriebsspindel, betätigt werden kann.

8. Vorrichtung zur Betätigung eines Stellventils (1) nach Anspruch 5, **dadurch gekennzeichnet, dass** im Bereich der beiden Öffnungen (4) für den Strömungsaustritt zwischen dem Strömungsleitgehäuse (3) und dem Kugelventil (28) jeweils Dichtungen (36) angeordnet sind.

9. Vorrichtung zur Betätigung eines Stellventils (1) nach Anspruch 7, **dadurch gekennzeichnet, dass** der Aktuator (5) eine Unterdruckdose (34) mit einem Unterdruckanschluss (35) ist.

## Claims

1. Device for actuating a control valve (1) with a flow housing (2) and an adjoining arranged flow guide housing (3), on which a / several openings(s) (4) is / are arranged, which depending on the intended flow direction in the flow housing (2) serves / serve either for the inlet or the outlet flow, in which the control valve (1) is positioned either in the flow housing (2) or the flow guide housing (3) in such a way that an actuator (5) arranged adjoining the control valve (1) can act on an actuating element (6) arranged on the control valve (1), either directly or via an actuating device (7) positioned between the actuating element (6) and the actuator (5), **characterised by** the fact that,
a) the actuator (5) at the flow housing (2), a thrust piston (13) is rigidly attached at the flow housing (2) to a double lever (11) provided with linear movement, a rotation point (8), a load arm (9) and a force arm (10) rotating around its rotation point at the flow housing (2), and in a rigidly arranged piston guide (12), and
b) between a load application joint (14) arranged on the load arm (9) and the actuator (5) a swivel-mounted coupling rod (15) is arranged, with a connecting rod (18) swivel-mounted between a force application joint (16) on the force arm (10) and the actuating joint (17) of the thrust piston (13), and
c) a thrust joint (19) is mounted on the end of the thrust piston (13) opposite the actuating joint (17), in which the actuating element (6) of the control valve (1) is slide- or rotation-mounted, and
d) a return spring (20) arranged adjoining the thrust joint (19), which is mounted in a spring holder (21) arranged on the flow guide housing (3), acts in the direction of the longitudinal axis of the thrust piston (13) in such a way that the thrust piston (13) is always in play-free contact with the actuating joint (17) on the connecting rod (18).

2. Device for actuating a control valve (1) in accordance with Claim 1, in which the thrust joint (19) is arranged in a thrust piece (22), i.e. as a separate unit, in which in addition to a slotted hole running vertically to the slide direction of the thrust piston (13), adjoining the thrust joint (19) on one facing side, adjoining the return spring (20) which takes the form of a compression spring, a spring centring seat (23) is arranged, with a piston centring collar (24) with a housing support stay (25) on the opposite facing side adjoining the thrust piston (13).

3. Device for actuating a control valve (1) in accordance with Claim 1, **characterised by** the fact that the load application joint (14), the force application joint (16) and the actuating joint (17) take the form of ball joints.

4. Device for actuating a control valve (1) in accordance with Claim 1, **characterised by** the fact that piston seals (26) are arranged on the thrust-joint side end of the piston guide (12) of the thrust piston (13).

5. Device for actuating a control valve (1) in accordance with Claim 1, **characterised by** the fact that the control valve (1) takes the form of a ball valve (28) provided with a blocking area (27) with a ball valve axis (29) mounted in the flow guide housing (3), with two openings (4) for the flow outlet, and an eccentric pin (30) arranged as the actuating element (6) spaced at a radius from the ball valve axis (29).

6. Device for actuating a control valve (1) in accordance with Claim 1, **characterised by** the fact that an axially flowed-through coolant pump (31) with a semi-axial paddle blade (33) arranged on a drive shaft (32) is arranged in the flow housing (2).

7. Device for actuating a control valve (1) in accordance with Claim 1, **characterised by** the fact that the actuator (5) can be operated pneumatically, hydraulically, electrically or also electro-mechanically, e.g. by means of a drive spindle driven by a stepping motor.

8. Device for actuating a control valve (1) in accordance with Claim 5, **characterised by** the fact that seals (36) are arranged in the area of the two openings (4) for the flow outlet between the flow guide housing (3) and the ball valve (28).

9. Device for actuating a control valve (1) in accordance with Claim 7, **characterised by** the fact the actuator (5) is a low-pressure socket (34) with a low-pressure connection (35).

## Revendications

1. Dispositif d'actionnement d'une vanne de commande (1) avec un carter d'écoulement (2) et un carter de guidage d'écoulement (3) disposé en son voisinage sur lequel une/plusieurs ouverture/s (4) est/sont disposée/s servant, selon la direction d'écoulement prévue dans le carter d'écoulement (2), soit l'entrée d'écoulement soit la sortie d'écoulement, la vanne de commande (1) étant disposée soit dans le carter d'écoulement (2) et/soit dans le carter de guidage d'écoulement (3) de telle manière qu'un actionneur (5) disposé au voisinage de la vanne de commande (1) est en mesure d'agir sur un élément d'actionnement (6) disposé sur la vanne de commande (1) de manière directe ou par le biais d'un dispositif d'actionnement (7) disposé entre l'élément d'actionnement (6) et l'actionneur (5), **caractérisé par le fait**
a) **que** l'actionneur (5) est fixé de manière rigide au carter d'écoulement (2), qu'un double levier (11) équipé d'un pivot (8), d'un bras de charge (9) et d'un bras de force (10) est fixé de manière articulée autour de son pivot sur le carter d'écoulement (2) et qu'un poussoir (13) placé rigidement dans un guidage de piston (12) lui-même disposé sur le carter d'écoulement (2) est fixé sur le carter d'écoulement (2) de manière à se déplacer linéairement, et
b) **qu'**une tige d'accouplement (15) est disposée de manière basculante entre une rotule d'application de charge (14) placée sur le bras de charge (9) et l'actionneur (5) et qu'une bielle (18) est disposée de manière basculante entre une rotule d'application de force (16) placée sur le bras de force (10) et la rotule d'actionnement (17) du poussoir (13), et
c) **qu'**une rotule de poussée (19) est disposée sur l'extrémité du poussoir (13) à l'opposé de la rotule d'actionnement (17), dans laquelle l'élément d'actionnement (6) de la vanne de commande (1) est disposée de manière à pouvoir coulisser et/ou pivoter, et
d) **qu'**un ressort de rappel (20) disposé au voisinage de la rotule de poussée (19), lequel ressort de rappel (20) est placé dans un logement de ressort (21) disposé sur le carter de guidage d'écoulement (3), agit sur le poussoir (13) en direction de l'axe longitudinal de celui-ci de telle manière que le poussoir (13) repose en permanence sur la bielle (18) sans jeu avec la rotule d'actionnement (17).

2. Dispositif d'actionnement d'une vanne de commande (1) selon l'exigence 1 **caractérisé par le fait que** la rotule de poussée (19) est disposée dans une pièce de poussée (22), c'est-à-dire en tant qu'unité séparée, dans laquelle, à côté d'un trou oblong aligné perpendiculairement à la direction de déplacement du poussoir (13), au voisinage de la rotule de poussée (19), sur un côté frontal, au voisinage du ressort de rappel (20) conçu comme ressort de pression, un siège de centrage de ressort (23) est disposé et, sur le côté frontal situé à l'opposé, au voisinage du poussoir (13), une collerette de centrage de piston (24) avec une barrette d'appui de carter (25) est disposée.

3. Dispositif d'actionnement d'une vanne de commande (1) selon l'exigence 1 **caractérisé par le fait que** la rotule d'application de charge (14), la rotule d'application de force (16) et la rotule d'actionnement (17) sont conçues comme rotules à billes.

4. Dispositif d'actionnement d'une vanne de commande (1) selon l'exigence 1 **caractérisé par le fait que** des joints de piston (26) sont disposés à l'extrémité du côté de rotule de poussée du guidage de piston (12) du poussoir (13).

5. Dispositif d'actionnement d'une vanne de commande (1) selon l'exigence 1 **caractérisé par le fait que** la vanne de commande (1) est conçue comme vanne sphérique (28) équipée d'une surface d'arrêt (27), avec un axe de vanne sphérique (29) possédant deux ouvertures (4) pour la sortie d'écoulement et disposé dans le carter de guidage d'écoulement (3) et avec une goupille excentrique (30) comme élément d'actionnement (6) et disposée à une distance d'un rayon de l'axe de vanne sphérique (29).

6. Dispositif d'actionnement d'une vanne de commande (1) selon l'exigence 1 **caractérisé par le fait que**, dans le carter d'écoulement (2), est disposée une pompe d'agent de refroidissement (31) traversée axialement avec une roue à aubes semi-axiale (33) disposée sur un arbre d'entraînement (32).

7. Dispositif d'actionnement d'une vanne de commande (1) selon l'exigence 1 **caractérisé par le fait que** l'actionneur (5) peut être actionné de manière pneumatique, hydraulique, électrique mais aussi électromécanique, p. ex. au moyen d'une broche d'entraînement commandée par un moteur pas à pas.

8. Dispositif d'actionnement d'une vanne de commande (1) selon l'exigence 5 **caractérisé par le fait que** des joints (36) sont disposés dans la zone des deux ouvertures (4) pour la sortie d'écoulement entre le carter de guidage d'écoulement (3) et la vanne sphérique (28).

9. Dispositif d'actionnement d'une vanne de commande (1) selon l'exigence 7 **caractérisé par le fait que** l'actionneur (5) est un boîtier de dépression (34) avec un raccord de dépression (35).
